# FASCICULE DE BREVET EUROPEEN

(11) **EP 0 772 955 B1**
(45) Date de publication et mention de la délivrance du brevet: **23.09.1998**
(21) Numéro de dépôt: 95926417.7
(22) Date de dépôt: 24.07.1995
(51) Int. Cl.: H05B 6/12, H01F 41/04

(54) **INDUCTEUR ET PROCEDE DE REALISATION D'UN INDUCTEUR**
INDUKTOR UND VERFAHREN ZUR HERSTELLUNG EINES INDUKTORS
INDUCTOR AND METHOD FOR MAKING AN INDUCTOR

(30) Priorité: 29.07.1994 FR 9409670
(43) Date de publication de la demande: 14.05.1997
(73) Titulaire: SEB S.A., 69130 Ecully (FR)
(72) Inventeur: ANTOINE, Dominique, F-88120 Cleurie (FR); HANTZ, Dominique, F-88310 Cornimont (FR)
(86) Numéro de dépôt international: FR9500989
(87) Numéro de publication internationale: WO9604767

(56) Documents cités:
- EP-A- 0 158 353
- FR-A- 2 309 109
- PATENT ABSTRACTS OF JAPAN vol. 018 no. 324 (E-1564) ,20 Juin 1994 & JP,A,06 076931 (NIPPON PUROBIIMU KOGYO KK) 18 Mars 1994,
- PATENT ABSTRACTS OF JAPAN vol. 004 no. 162 (E-033) ,12 Novembre 1980 & JP,A,55 110021 (SHOWA ELECTRIC WIRE & CABLE CO LTD) 25 Août 1980,

## Description

### DOMAINE TECHNIQUE

La présente invention se rapporte au domaine de la fabrication des inducteurs et en particulier de fabrication d'enroulements ou de bobinages plats, de fils électriques destinés à la réalisation de foyers à induction, par exemple utilisés pour la cuisson des aliments.

### TECHNIQUE ANTERIEURE

Il est déjà connu dans l'art antérieur de réaliser de tels bobinages plats en utilisant des fils électriques lesquels sont enrobés d'une couche thermo-adhérente. Lorsque l'enroulement est terminé, un courant électrique traverse le fil électrique pour l'échauffer et procurer ainsi une adhérence de chaque enroulement avec, d'une part un enroulement voisin et d'autre part avec son support. L'ensemble rigide peut alors être facilement manipulé sans risquer de défaire les enroulements successifs. Une telle opération de maintien précède en général une opération d'étuvage dans laquelle l'ensemble constitué, notamment de l'enroulement, est imprégné d'une résine dont le but est d'assurer le maintien final et homogène de l'ensemble. Un tel procédé de fabrication d'un inducteur est par exemple connu du document FR-A-2 309 109 ayant servi à délimiter le préambule de la revendication 1. La mise en oeuvre d'une telle technique est lourde et coûteuse car le fil électrique isolé électriquement est enrobé d'une couche thermo-adhérente supplémentaire après avoir été traversé par un courant électrique. Toutes ces opérations sont à l'origine d'un processus de fabrication coûteux et compliqué.

Des documents EP-A-0158353 et JP-A-55 110021 sont connus des inducteurs ayant les caractéristiques telles que décrites dans le préambule de la revendication 8.

### EXPOSE DE L'INVENTION

L'objet de la présente invention vise à fournir un procédé de fabrication d'enroulement de fils électriques ou de bobinages plats pour la réalisation d'inducteurs permettant de manipuler après l'opération d'enroulement ainsi qu'un inducteur, lesdits enroulements avec leur support sans risquer de défaire ou de nuire à la compacité desdits enroulements.

Un autre objet de la présente invention vise à utiliser des moyens de maintien très peu coûteux et dont la mise en oeuvre est extrêmement simple pour assurer un maintien provisoire des enroulements sur leur support avant une opération d'étuvage, laquelle est destinée à assurer un maintien définitif.

Les buts assignés à l'invention sont atteints à l'aide d'un procédé de réalisation d'un inducteur pour foyers à induction consistant à enrouler sur un support un conducteur électrique enrobé d'un matériau isolant électriquement et à utiliser une résine pour maintenir les enroulements obtenus sous une forme compacte après une opération d'étuvage, caractérisé en ce qu'il consiste :
- à utiliser un moyen de collage à prise rapide pour maintenir les enroulements (10) sur leur support (5) avant l'opération d'étuvage.

Les buts de la présente invention sont également atteints à l'aide d'un inducteur pour foyer à induction comportant un support sur lequel est enroulé une série d'enroulements enrobés d'un matériau isolant électrique, des ouvertures étant ménagés dans le support en regard des enroulements caractérisé en ce que lesdites ouvertures contiennent des moyens de collage à prise rapide pour assurer le maintien des enroulements sur le support.

### DESCRIPTION SOMMAIRE DES DESSINS

Les caractéristiques et avantages de l'invention ressortiront mieux à la lecture de la description donnée ci-après en référence aux dessins annexés donnés à titre d'exemples non limitatifs dans lesquels :
- La figure 1 représente une vue partielle et en coupe de l'enroulement et de son support monté sur un dispositif d'enroulement utilisé dans le procédé conforme à l'invention.
- La figure 2 représente une vue de face d'un support utilisé dans le procédé conforme à l'invention.
- La figure 3 représente un détail de montage du procédé conforme à l'invention.

### MEILLEURE MANIERE DE REALISER L'INVENTION

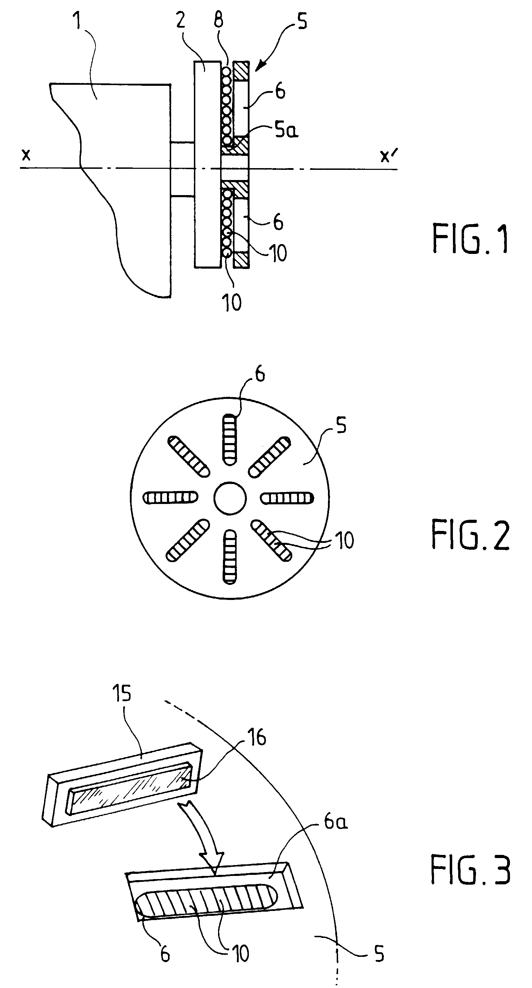

Le procédé conforme à l'invention est mis en oeuvre à l'aide d'un tour 1, muni d'un mandrin 2, lesquels sont représentés à la figure 1. Le mandrin 2 présente une configuration appropriée pour permettre le montage d'un support 5 sur lequel seront effectués des enroulements 10 de fils pour constituer un inducteur. Le support 5 est par exemple un disque présentant sur sa face arrière et dans sa partie centrale une collerette 5a destinée à être introduite dans le mandrin 2 et à servir de base pour supporter le premier des enroulements 10. Le support 5 est en appui par sa collerette 5a contre le mandrin 2 et crée ainsi un espacement 8 entre ledit mandrin 2 et la face arrière du support 5 pour y loger les enroulements 10. Les enroulements 10 sont constitués de fils électriques enrobés d'une couche d'isolant électrique. Le support 5 présente également des ouvertures 6 ménagées dans le disque et réalisées sous forme de fentes radiales par exemple, et en regard des enroulements 10.

Avantageusement le support 5 présente au moins deux ouvertures 6 réparties par exemple de manière symétrique par rapport à un axe x-x' représentant l'axe de montage du support 5 sur le mandrin 2 ainsi que l'axe de rotation du tour 1.

La figure 2 montre un exemple de réalisation du support 5 muni de huit ouvertures 6 réparties angulairement de manière régulière sur le support 5 autour de son axe x-x'. Les ouvertures 6 permettent d'accéder directement à des portions des enroulements 10 répartis sur la face arrière du support 5. Les ouvertures 6 présentent avantageusement une forme longitudinale, du type rectangulaire. Selon une variante de réalisation des ouvertures 6, ces dernières sont réalisées par des perçages.

Le procédé de réalisation de l'inducteur conforme à la présente invention consiste donc à utiliser un moyen de collage à prise rapide pour maintenir les enroulements 10 sur leur support 5 avant l'opération d'étuvage. Cette demière consiste en effet à imprégner les enroulements 10 effectués sur le support 5 d'un matériau du type résine permettant d'obtenir un maintien définitif desdits enroulements 10 les uns contre les autres et sur le support 5. Lors de cette opération d'étuvage l'ensemble constitué du support 5 et des enroulements 10 est par exemple plongé dans un bac contenant une résine du type résine d'imprégnation de bobinage électrique.

Il est donc important lors de la réalisation de l'inducteur que les enroulements 10 restent intimement liés au support 5 lorsque ce demier est dégagé du mandrin 2 pour procéder à l'opération d'étuvage. Ainsi le procédé conforme à la présente invention consiste à introduire les moyens de collage dans les ouvertures 6 ménagées dans le support 5. Ces moyens de collage constituent donc des moyens de maintien provisoires avant l'opération d'étuvage permettant de constituer un ensemble rigide et compact formé des enroulements 10 et du support 5. L'ensemble ainsi constitué peut donc être manipulé et orienté dans tous les sens sans désolidariser les enroulements 10 du support 5. En outre l'utilisation du moyen de collage a prise rapide permet de séparer presque instantanément le support 5 associé aux enroulements 10, du mandrin 2 sans attendre un temps de séchage éventuel d'une résine projetée sur les enroulements 10 et le support 5 ou d'un revêtement enrobant le fil électrique enroulé, comme cela est le cas dans les procédés de réalisation d'inducteurs connus.

Le procédé conforme à l'invention, consiste à utiliser une colle à prise rapide en tant que moyen de collage. La colle à prise rapide, non représentée aux figures, est dans ce cas introduite dans les ouvertures 6 et vient en contact, d'une part avec les enroulements 10, et d'autre part avec le support 5. La colle à prise rapide permet ainsi de solidariser les enroulements 10 du support 5 de façon quasi instantanée. Au sens de l'invention on entend par colle à prise rapide, des colles à base de cyanoacrilate par exemple, ou des colles dites "à chaud" (hot melt) à base de polymères dont le temps de prise est généralement inférieur ou égal à dix secondes. On peut également avoir recours à des colles à prise plus lente, telles que des colles à base de silicone dont le temps de prise peut atteindre une ou plusieurs heures. Cependant ce procédé ne se situe pas dans le champ de protection tel que défini par les revendications de procédé de la présente demande. Dans le cas d'utilisation de colles à prise lente telles que des colles silicones, il est souhaitable d'avoir recours à un organe de maintien provisoire, tel qu'un contre-support (non représenté aux figures) qui est positionné contre le support 5, par exemple sur la face opposée à la collerette 5a, après dépôt de la colle silicone. L'utilisation d'un contre-support permet de dissocier le support 5 du mandrin 2, alors que la colle silicone n'a pas encore agi définitivement, sans risquer un déplacement des enroulements 10. Sur le plan industriel, chaque ensemble formé par le support 5 et le contre-support peut être déposé ou empilé à des fins de séchage dans des stations d'attente en vue d'assurer une production continue d'inducteurs. Après séchage de la colle silicone, le contre-support est retiré.

Selon une variante de mise en oeuvre du procédé conforme à l'invention, ce demier consiste à utiliser des éléments de ferrite 15 en association avec les moyens de collage pour maintenir les enroulements 10 sur leur support 5. Une telle mise en oeuvre est schématisée par exemple à la figure 3 où des éléments de ferrite 15 de forme, par exemple rectangulaire, présentent un adhésif double face 16 collé sur l'une des parois de l'élément de ferrite 15. L'élément de ferrite 15, préférentiellement de forme conjuguée aux ouvertures 6, est ensuite introduit dans les ouvertures 6 du support 5 de manière à ce que l'adhésif double face 16 vienne en contact avec la partie des enroulements 10 se trouvant en regard des ouvertures 6. Les éléments de ferrite 15 se trouvent ainsi solidarisés avec les enroulements 10. Avantageusement les ouvertures 6 présentent des rebords 6a internes pour maintenir l'élément de ferrite 15 par appui sur les rebords 6a dans le logement constitué par chaque ouverture 6. Les enroulements 10 ne sont donc pas en mesure d'entraîner les éléments de ferrite 15 aux travers des ouvertures 6. Finalement, l'ensemble constitué, du support 5, des enroulements 10, des éléments de ferrite 15 associés à un adhésif double face 16, est un ensemble rigide et compact facilement manipulable avant une opération d'étuvage.

Le procédé conforme à l'invention consiste donc à utiliser au moins une bande d'adhésif double face 16 en tant que moyen de collage. Les enroulements 10, constituant par exemple un bobinage plat, peuvent donc être utilisés dans toute position ou orientation de l'espace sur une autre chaîne de montage ou de fabrication après la séparation desdits enroulements 10 du mandrin 2. La fixation du support 5 sur le mandrin 2 est effectuée par tout moyen connu.

La présente invention se distingue donc par l'utilisation de moyens de collage à prise rapide pour solidariser les enroulements 10 de fils conducteurs électriques et enrobés d'un matériau isolant électrique avec un support 5 sur lequel sont effectués lesdits enroulements 10 de manière à réaliser un inducteur pour foyer à induction, facilement manipulable, sans défaire les enroulements 10.

Une telle utilisation consiste à associer des éléments de ferrite, 15 aux moyens de collage. L'utilisation de moyens de collage à prise rapide conformes à l'invention consiste par exemple à utiliser une colle à prise rapide pour solidariser les enroulements 10 des fils conducteurs électriques enrobés d'un matériau isolant électrique, d'un support sur lequel sont effectués les enroulements 10 de manière à réaliser un inducteur pour foyer à induction facilement manipulable en maintenant en liaison intime les enroulements 10. L'utilisation de tels moyens de collage à prise rapide consiste à mettre en oeuvre une opération de collage à l'aide des ouvertures 6 ménagées dans le support 5 en regard des enroulements 10. De cette manière les moyens de collage viennent directement en contact avec au moins une portion des enroulements 10. Il est évident que les éléments de ferrite 15 peuvent également être associés à la colle à prise rapide conforme à l'invention. Cette demière peut, selon une autre variante du procédé de réalisation de l'inducteur conforme à l'invention, être répandue dans les ouvertures 6 sans adjonction d'un moyen supplémentaire. Les éléments de ferrite 15 utilisés servent essentiellement à canaliser le flux magnétique généré par l'inducteur mais peuvent avantageusement être remplacés par tout élément solide lorsqu'il n'y a pas nécessité technique d'utiliser des éléments de ferrite pour canaliser le flux magnétique.

Selon une variante supplémentaire du procédé de réalisation d'un inducteur conforme à l'invention, les moyens de collage à prise rapide sont exclusivement constitués d'un adhésif simple face venant se coller contre, d'une part une portion des enroulements 10 accessibles à travers les ouvertures 6, et d'autre part sur les rebords 6a internes aux ouvertures 6. Une surface de contact facilement déterminable par expérimentation entre l'adhésif simple face utilisé et la portion des enroulements 10 venant en contact, permet d'obtenir un maintien suffisant des enroulements 10 sur le support 5.
Un avantage de la présente invention réside dans l'utilisation d'un fil électrique standard pour réaliser les enroulements (10). Un tel fil n'est pas enrobé ou revêtu d'un matériau thermo-fusible, Son coût est ainsi réduit et le procédé de fabrication des inducteurs se trouve simplifié par la même occasion.

### POSSIBILITES D'APPLICATION INDUSTRIELLE

La présente invention trouve son application dans tous genres d'appareils à induction et en particulier les appareils électroménagers, du type tables de cuisson.

## Revendications

1. Procédé de réalisation d'un inducteur pour foyers à induction consistant à enrouler sur un support (5) un conducteur électrique enrobé d'un matériau isolant électriquement et à utiliser une résine pour maintenir les enroulements (10) obtenus sous une forme compacte après une opération d'étuvage,
caractérisé en ce qu'il consiste :
- à utiliser un moyen de collage à prise rapide pour maintenir les enroulements (10) sur leur support (5) avant l'opération d'étuvage.

2. Procédé selon la revendication 1 caractérisé en ce qu'il consiste à introduire les moyens de collage à prise rapide dans des ouvertures (6) ménagées dans le support (5), lesdites ouvertures (6) permettant d'accéder aux enroulements (10).

3. Procédé selon la revendication 2 caractérisé en ce qu'il consiste à utiliser des éléments de ferrite (15) en association avec les moyens de collage à prise rapide pour maintenir les enroulements (10) sur leur support (5).

4. Procédé selon l'une des revendications 2 à 3 caractérisé en ce qu'il consiste à utiliser de la colle à prise rapide en tant que moyen de collage à prise rapide.

5. Procédé selon la revendication 4 caractérisé en ce que la colle à prise rapide est une colle à base de cyanoacrilate, ou une colle à chaud.

6. Procédé selon l'une des revendications 2 à 5 caractérisé en ce qu'il consiste à utiliser au moins une bande d'adhésif (16) en tant que moyen de collage à prise rapide.

7. Procédé selon la revendication 6 caractérisé en ce qu'Il consiste à utiliser une bande adhésive double face associée par une face avec les éléments de ferrite (15) et par l'autre face avec les enroulements (10).

8. Inducteur pour foyer à induction comportant un support (5) sur lequel est enroulée une série d'enroulements (10) enrobés d'un matériau isolant électrique, des ouvertures (6) étant ménagées dans le support (5) en regard des enroulements (10) caractérisé en ce que lesdites ouvertures (6) contiennent des moyens de collage à prise rapide (15,16) pour assurer le maintien des enroulements (10) sur le support (5).

9. Inducteur selon la revendication 8 caractérisé en ce que les ouvertures (6) sont des fentes s'étendant radialement sur le support (5).

10. Inducteur selon la revendication 9 caractérisé en ce que les ouvertures (6) comportent un rebord (6a).

11. Inducteur selon la revendication 8 à 10 caractérisé en ce que les moyens de collage à prise rapide sont constitués par une colle à prise rapide.

12. Inducteur selon l'une des revendications 10, 11 caractérisé en ce que les moyens de collage à prise rapide sont constitués par une bande adhésive simple face disposée dans les ouvertures (6) contre le rebord (6a).

13. Inducteur selon l'une des revendications 8 à 10 caractérisé en ce que les moyens de collage à prise rapide sont constitués par une bande adhésive (16) double face, solidaire par une face d'un élément de ferrite (15) en appui dans une des ouvertures (6), et par une autre face des enroulements (10).

## Patentansprüche

1. Verfahren zur Herstellung eines Induktors für Induktionsherde, bei dem ein mit elektrisch nichtleitendem Material umhüllter Stromleiter auf einen Träger (5) gewickelt wird, und ein Harz verwendet wird, um die erhaltenen Wicklungen (10) nach einer Aushärtung in kompakter Form zu halten, dadurch gekennzeichnet, daß ein schnellabbindendes Klebemittel verwendet wird, um die Wicklungen (10) vor der Aushärtung auf ihrem Träger (5) zu halten.

2. Verfahren nach Anspruch 1, dadurch gekennzeichnet, daß die schnellabbindenden Klebemittel in im Träger (5) vorgesehene Öffnungen (6) eingebracht werden, wobei die Öffnungen (6) einen Zugang zu den Wicklungen (10) ermöglichen.

3. Verfahren nach Anspruch 2, dadurch gekennzeichnet, daß Ferritelemente (15) in Verbindung mit den schnellabbindenden Klebemitteln verwendet werden, um die Wicklungen (10) auf ihrem Träger (5) zu halten.

4. Verfahren nach einem der Ansprüche 2 bis 3, dadurch gekennzeichnet, daß schnellabbindender Leim als schnellabbinden-des Klebemittel verwendet wird.

5. Verfahren nach Anspruch 4, dadurch gekennzeichnet, daß der schnellabbindende Leim ein Leim auf Cyanacrylat-Basis oder ein Heißleim ist.

6. Verfahren nach einem der Ansprüche 2 bis 5, dadurch gekennzeichnet, daß zumindest ein Haftband (16) als schnellabbindendes Klebemittel verwendet wird.

7. Verfahren nach Anspruch 6, dadurch gekennzeichnet, daß ein beidseitiges Haftband verwendet wird, wobei eine Seite den Ferritelementen (15) und die andere Seite den Wicklungen zugeordnet ist (10).

8. Induktor für Induktionsherde, mit einem Träger (5), auf den eine Reihe von mit elektrisch nichtleitendem Material umhüllte Wicklungen (10) gewickelt ist, wobei im Träger (5) den Wickelungen (10) gegenüberliegend Öffnungen (6) vorgesehen sind, dadurch gekennzeichnet, daß die öffnungen (6) schnellabbindende Klebemittel (15, 16) enthalten, um den Halt der Wicklungen (10) auf dem Träger (5) zu gewährleisten.

9. Induktor nach Anspruch 8, dadurch gekennzeichnet, daß die Öffnungen (6) auf dem Träger (5) sich radial erstreckende Schlitze sind.

10. Induktor nach Anspruch 9, dadurch gekennzeichnet, daß die Öffnungen (6) einen Randabschnitt (6a) umfassen.

11. Induktor nach Anspruch 8 bis 10, dadurch gekennzeichnet, daß die schnellabbindenden Klebemittel aus einem schnellabbindenden Leim bestehen.

12. Induktor nach einem der Ansprüche 10, 11, dadurch gekennzeichnet, daß die schnellabbindenden Klebemittel aus einem einseitigen Haftband bestehen, das in den Öffnungen (6) am Randabschnitt (6a) angebracht ist.

13. Induktor nach einem der Ansprüche 8 bis 10, dadurch gekennzeichnet, daß die schnellabbindenden Klebemittel aus einem beidseitigen Haftband (16) bestehen, welches mit einer Seite mit dem Ferritelement (15) in Abstützung in einer der Öffnungen (6) und mit der anderen Seite mit den Wicklungen (10) verbunden ist.

## Claims

1. A method of making an inductor for an induction furnace, the method consisting in winding an electrical conductor coated in an electrically insulating material onto a support (5) and in using a resin for holding the resulting windings (10) in compact form after a baking operation,
the method being characterized in that it consists:
• in using a quick-setting adhesive means for holding the windings (10) on the support (5) prior to the baking operation.

2. A method according to claim 1, characterized in that it consists in injecting the quick-setting adhesive means into openings (6) provided in the support (5), said openings (6) giving access to the windings (10).

3. A method according to claim 2, characterized in that it consists in using ferrite elements (15) in association with the quick-setting adhesive means to hold the windings (10) on the support (5).

4. A method according to claim 2 or 3, characterized in that it consists in using a quick-setting glue as the quick-setting adhesive means.

5. A method according to claim 4, characterized in that the quick-setting glue is a glue based on cyanoacrylate or is a hot-melt glue.

6. A method according to any one of claims 2 to 5, characterized in that it consists in using at least one adhesive strip (16) as the quick-setting adhesive means.

7. A method according to claim 6, characterized in that it consists in using a double-sided adhesive strip associated via one face with the ferrite elements (15) and via its other face with the windings (10).

8. An inductor for an induction furnace including a support (5) on which a series of windings (10) coated in electrically insulating material is wound, openings (6) being provided in the support (5) in register with the windings (10), characterized in that said openings (6) contain quick-setting adhesive means (15, 16) for holding the windings (10) on the support (5).

9. An inductor according to claim 8, characterized in that the openings (6) are slots extending radially over the support (5).

10. An inductor according to claim 9, characterized in that the openings (6) have rims (6a).

11. An inductor according to any one of claims 8 to 10, characterized in that the quick-setting adhesive means are constituted by a quick-setting glue.

12. An inductor according to claim 10 or 11, characterized in that the quick-setting adhesive means are constituted by a single-sided adhesive strip disposed in the openings (6) against the rims (6a).

13. An inductor according to any one of claims 8 to 10, characterized in that the quick-setting adhesive means are constituted by a double-sided adhesive strip (16) secured via one face to a ferrite element (15) pressed into one of the openings (6), and via another face to the windings (10).
